Europäisches Patentamt

European Patent Office

Office européen des brevets

(11) Veröffentlichungsnummer: **0 036 996**
**A2**

(12) # EUROPÄISCHE PATENTANMELDUNG

(21) Anmeldenummer: 81101923.1

(22) Anmeldetag: 16.03.81

(51) Int. Cl.³: **G 01 K 17/06**

(30) Priorität: 31.03.80 DE 3012436

(43) Veröffentlichungstag der Anmeldung.
07.10.81 Patentblatt 81·40

(84) Benannte Vertragsstaaten:
AT BE CH FR GB IT LI NL

(71) Anmelder Licentia Patent-Verwaltungs-GmbH
Theodor-Stern-Kai 1
D-6000 Frankfurt·Main 70(DE)

(72) Erfinder: Gottfried, Gerd-Ulrich
Querstrasse 3
D-6457 Maintal 4(DE)

(72) Erfinder: Ohl, Reinhard
An der Steinmauer 16
D-6114 Gross-Umstadt(DE)

(74) Vertreter: Lertes, Kurt, Dr. et al,
Licentia Patent-Verwaltungs-GmbH Theodor-Stern-Kai
1
D-6000 Frankfurt 70(DE)

(54) **Bewertungswiderstandsanordnung für Heizkörperfühler.**

(57) Bewertungswiderstandsanordnung für eine Meßschaltung, die Meß- und Vergleichsfühler enthält und die Heizleistung von Heizkörpern, Fußbodenheizungen oder dergl. bestimmt.

Die Bewertungswiderstandsanordnung enthält eine Trägerplatte, auf der Widerstände in Serie geschaltet sind. Die Werte der Widerstände sind vorgegebenen Stufen der Heizleistung angepaßt. Weiterhin sind die Widerstände durch leicht auftrennbare Kurzschlußleitungen überbrückt, die bei ausgewählten Widerständen, deren Widerstandswerte der Heizleistung entsprechen, aufgetrennt sind.

FIG.1

EP 0 036 996 A2

F 79/52
Eb/Mi
12.03.1981

Licentia
Patent-Verwaltungs-GmbH
6000 Frankfurt/M 70, Theodor-Stern-Kai 1

Bewertungswiderstandsanordnung für Heizkörperfühler

Die Erfindung bezieht sich auf eine Bewertungswiderstandsanordnung zur Anpassung von Meß- und Vergleichsfühler enthaltenden Meßschaltungen an die Heizleistung von Heizkörpern, Fußbodenheizungen, Klimaanlagen oder dergl. Einrichtungen, deren Wärmeabgabe gemessen wird.

Zur elektrischen Erfassung der von Radiator-Heizkörpern in Räume abgegebenen Wärmemenge werden die Heizkörper und eine Wand mit jeweils einem Meß- und einem Vergleichsfühler versehen. Meß- und Vergleichsfühler bilden ein System, dem ein Bewertungswiderstand zugeordnet ist. Mit diesem Bewertungswiderstand wird das Fühlersystem an die Fläche des jeweiligen Heizkörpers angepaßt (DT-OS 27 34 406).

Die von den Heizkörpern abgegebene Leistung hängt vom Material und von der vorhandenen Oberfläche ab. Da die Heizkörper in abgestuften Größen hergestellt werden, ergeben sich für die abgegebene Wärmeleistung ebenfalls Stufen. Deshalb reicht die Verwendung von mit ihren Werten den Stufen der Heizkörperleistung angepaßten Bewertungswiderständen für die Anpassung aus.

Der Erfindung liegt die Aufgabe zugrunde, eine für einen weiten Heizkörperleistungsbereich verwendbare Bewertungswiderstandsanordnung zu entwickeln, die am Aufstellort des Heizkörpers schnell und einfach ohne Einsatz eines Meßgerätes auf die Leistung des Heizkörpers eingestellt werden kann.

Die Aufgabe wird erfindungsgemäß dadurch gelöst, daß auf einer Trägerplatte Widerstände in Serie geschaltet sind, deren Widerstandswerte vorgegebenen Stufen der Heizleistung angepaßt sind und daß die Widerstände jeweils durch leicht auftrennbare Kurzschlußleitungen überbrückt sind, die bei denjenigen Widerständen aufgetrennt sind, deren Widerstandswerte einzeln oder zusammen der Heizleistung des zugeordneten Heizkörpers entsprechen.

Diese Anordnung kann durch eine entsprechende Zahl von abgestuften Widerständen alle Stufen eines eine Leistung von 200 bis 6000 Watt umfassenden Heizkörperprogrammes erfassen. Deshalb reicht eine Type der Bewertungswiderstandsanordnung für alle Einzelfälle aus. Es ergibt sich lediglich ein geringer Anpassfehler, der durch die ungleichen Leistungssprünge zwischen den verschiedenen Heizkörpern bedingt ist. Da nur eine Type benötigt wird, können größere Stückzahlen kostengünstig hergestellt werden. Darüber hinaus vereinfacht sich die Lagerhaltung und Verteilung.

Bei einer zweckmäßigen Ausführungsform ist vorgesehen, daß die Kurzschlußleitungen als gedruckte Leiterbahnen auf der Trägerplatte angeordnet sind und mit einem Teil auf rechteckigen Vorsprüngen der Ränder der Leiterplatte verlaufen, wobei die Vorsprünge leicht abbrechbar sind. Die ausgewählten Vorsprünge können ohne Schwierigkeit z. B. mit einer Flachzange abgebrochen werden.

Eine andere bevorzugte Ausführungsform besteht darin, daß die Kurzschlußleitungen als gedruckte Leiterbahnen auf der Leiterplatte angeordnet sind und mit einem Teil zwischen dem Rand der Leiterplatte und nahe am Rand angeordneten Bohrungen über leicht ausbrechbare Plattenabschnitte verlaufen.

Diese Anordnung läßt sich besonders kostengünstig herstellen, da der Aufwand für das Bohren an den Rändern gering ist. Das Auftrennen der Verbindungen erfolgt ebenfalls mit einer Flachzange.

Die Erfindung wird im folgenden an Hand eines in einer Zeichnung dargestellten Ausführungsbeispiels näher erläutert, aus dem sich weitere Merkmale sowie Vorteile ergeben.

Es zeigen:

Figur 1 eine Draufsicht einer Bewertungswiderstandsanordnung,
Figur 2 einen Teil einer anderen Ausführungsform einer Bewertungswiderstandsanordnung in Draufsicht.

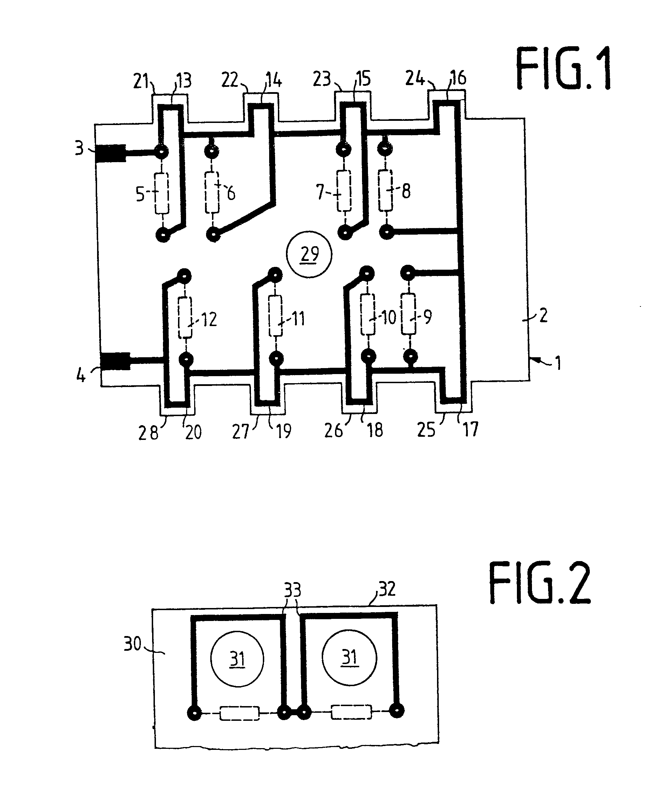

Eine Bewertungswiderstandsanordnung 1 enthält eine Leiterplatte 2 aus Kunststoff mit Anschlüssen 3 und 4. Auf der Leiterplatte 2 sind ohmsche Widerstände 5, 6, 7, 8, 9, 10, 11 und 12 in Reihe geschaltet. Die Verbindungen zwischen jeweils zwei Widerständen werden durch nicht näher bezeichnete gedruckte Leiterbahnen hergestellt. In Fig. 1 ist die Leiterbahnseite der Leiterplatte 2 dargestellt. Die Widerstände 5 bis 12, deren Anschlußdrähte in Lötaugen der Leiterbahnen befestigt sind, befinden sich auf der anderen Seite der Leiterplatte 2 und sind deshalb gestrichelt dargestellt.

Die Widerstände 5 bis 12 sind jeweils durch Kurzschlußleitungen 13, 14, 15, 16, 17, 18, 19 und 20 überbrückt. Diese Kurzschlußleitungen verlaufen in Form von gedruckten Leiterbahnen jeweils über rechteckige Vorsprünge 21, 22, 23, 24, 25, 26, 27 und 28 der Leiterplatte 2. Beim Abbrechen der Vorsprünge 21 bis 28 wird die jeweilige Leiterbahn 13, 14, 15, 16, 17, 18, 19 bzw. 20 unterbrochen. Dies hat zur Folge, daß der zugehörige Widerstand in den zwischen den Anschlüssen 3 und 4 verlaufenden Strompfad eingefügt wird.

Die Widerstände 5 bis 12 haben beispielsweise jeweis den Heizleistungen 25, 50, 100, 200, 400, 800, 1600 und 3200 W zugeordnete Werte. Eine Anpassung der Anordnung an einen Heizkörper mit 200 W Leistung erfolgt dann durch Abtrennung des Vorsprungs 24. Wenn die Vorsprünge 15 und 17 abgetrennt sind, ist die Anordnung an eine Heizleistung von z. B. 480 W angepaßt. Die Fehlanpassung beträgt hierbei 20 W. Durch die Verwendung entsprechend fein gestufter Widerstände läßt sich die Fehlanpassung beliebig klein halten. Die in Figur 1 gezeigte Anordnung hat eine maximale Fehlanpassung von 25 W, ein Wert, der in der Praxis eine ausreichend genaue Feststellung der

0036996

4

verbrauchten Wärmemenge gestattet. Hierbei ist zu berücksichtigen, daß die Heizkörper mit Heizleistungen ab 200 W zur Verfügung stehen. Es werden jedoch überwiegend Heizkörper mit größeren Leistungen verwendet.

In der nachfolgenden Tabelle sind in Abhängigkeit von einem willkürlich gewählten Bereich zwischen 800 und 1000 W Heizleistung die für die Auswahl der entsprechenden Heizleistungswerte abzubrechenden Vorsprünge angegeben.

| Heizleistung/W | 800 | 825 | 850 | 875 | 900 | 925 | 950 | 975 | 100 |
|---|---|---|---|---|---|---|---|---|---|
| Zu entfernende Vorsprünge | 26 | 26,21 | 26,22 | 21,22, 26 | 23,26 | 21,23, 26 | 22,23, 26 | 21,22, 23,26 | 26,24 |

Die in Figur 1 dargestellte Anordnung erlaubt die Anpassung an Heizkörper zwischen 200 und 3 175 W mit Zwischenstufen von 25 W.

Die Leiterplatte 2 ist vorzugsweise in ihren Abmessungen so gewählt, daß sie in eine übliche Unter- oder Aufputzdose eingesetzt werden kann. Sie weist eine Bohrung 29 in der Mitte zum Einfügen von Befestigungsmitteln auf.

Die in Figur 2 dargestellte Leiterplatte 30 hat statt Vorsprüngen Bohrungen 31, die nahe am Plattenrand 32 verlaufen. Kurzschlußleitungen 33 für die nicht näher bezeichneten Widerstände auf der Leiterplatte 30 verlaufen zwischen dem Rand 32 und den Bohrungen 31. Sie werden durch die Entfernung des Materials zwischen Bohrung 31 und Rand 32 aufgetrennt.

Die oben erläuterte Bewertungswiderstandsanordnung wird vorteilhafterweise auch bei Fußbodenheizungen oder Klimaanlagen eingesetzt. Sie kann auch bei der Bestimmung der Kühlleistung von Klimaanlagen verwendet werden. Darüber hinaus eignet sie sich in all denen Fällen zur Ermittlung des Wärmeverbrauchs, in denen der Wärmeverbrauch vom Wärmeabnehmer bestimmt werden soll. Beispielsweise kann der Wärmeübergang zwischen Trennwänden ermittelt werden.

0036996

Licentia
Patent-Verwaltungs-GmbH
6000 Frankfurt/M 70, Theodor-Stern-kai 1

F 79/52
Eb/Mi
12.03.1981

Patentansprüche

1. Bewertungswiderstandsanordnung zur Anpassung von Meß- und Vergleichsfühler enthaltenden Meßschaltungen an die Heizleistung von Heizkörpern, Fußbodenheizungen, Klimaanlagen oder dergl. wärmeerzeugenden Einrichtungen, deren Wärmeabgabe gemessen wird,
dadurch gekennzeichnet,
daß auf einer Trägerplatte (2, 30) Widerstände (5 bis 12) in Serie geschaltet sind, deren Widerstandswerte vorgegebenen Stufen der Heizleistung angepaßt sind und daß die Widerstände (5 bis 12) jeweils durch leicht auftrennbare Kurzschlußleitungen (13 bis 20, 33) überbrückt sind, die bei denjenigen Widerständen aufgetrennt sind, deren Widerstandswerte einzeln oder zusammen der Heizleistung des zugeordneten Heizkörpers entspricht.

2. Bewertungswiderstandsanordnung nach Anspruch 1,
dadurch gekennzeichnet,
daß die Kurzschlußleitungen (13 bis 20) als gedruckte Leiterbahnen auf der Trägerplatte (2) angeordnet sind und mit einem Teil auf rechteckigen Vorsprüngen (21 bis 28) der Ränder der Leiterplatte (2) verlaufen, wobei die Vorsprünge (21 bis 28) leicht abbrechbar sind.

3. Bewertungswiderstandsanordnung nach Anspruch 1,
d a d u r c h   g e k e n n z e i c h n e t ,
daß die Kurzschlußleitungen (33) als gedruckte Leiterbahnen auf der Leiterplatte (30) angeordnet sind und mit einem Teil zwischen dem Rand (32) der Leiterplatte (30) und nahe am Rand angeordneten Bohrungen (31) über leicht ausbrechbare Plattenabschnitte verlaufen.

4. Bewertungswiderstandsanordnung nach Anspruch 1 oder einem der folgenden,
d a d u r c h   g e k e n n z e i c h n e t ,
daß die Widerstandswerte der verschiedenen Widerstände (5 bis 12) sich voneinander nach einer binären Stufung unterscheiden.

1/1

FIG.1

FIG.2